# EUROPÄISCHE PATENTSCHRIFT

(11) **EP 1 626 215 B1**
(45) Veröffentlichungstag und Bekanntmachung des Hinweises auf die Patenterteilung: **29.08.2007**
(21) Anmeldenummer: 05015306.3
(22) Anmeldetag: 14.07.2005
(51) Int. Cl.: F16K 31/34, F16K 31/385

(54) **Schwimmergesteuertes Servoventil**
Float-operated pilot valve
Servovanne commandée par flotteur

(30) Priorität: 10.08.2004 DE 102004038683
(43) Veröffentlichungstag der Anmeldung: 15.02.2006
(73) Patentinhaber: A. u. K. Müller GmbH & Co. KG, 40595 Düsseldorf (DE)
(72) Erfinder: Glaus, Uwe, 40593 Düsseldorf (DE); Schön, Hartmut, 51061 Köln (DE)
(74) Vertreter: Feder, Wolf-Dietrich

(56) Entgegenhaltungen:
- WO-A-00/19135
- WO-A-01/20206
- AU-B2- 459 533
- DE-U1- 29 911 276
- US-A1- 2003 079 780

## Beschreibung

Die Erfindung betrifft ein schwimmergesteuertes Servoventil mit den Merkmalen aus dem Oberbegriff des Patentanspruchs 1.

Derartige schwimmergesteuerte Servoventile sind bekannt und beispielsweise in US 20030079780 beschrieben.

Weitere schwimmergesteuerte Servoventile sind aus DE 19815754A bekannt.

Bei derartigen schwimmergesteuerten Servoventilen tritt das Problem auf, dass infolge des Regelvorgangs vor dem endgültigen Schließen des Ventils ein langes ins Tropfen übergehendes Nachlaufen stattfindet.

Der Erfindung liegt die Aufgabe zugrunde, ein schwimmergesteuertes Servoventil mit den Merkmalen aus dem Oberbegriff des Patentanspruchs 1 so auszugestalten, dass der Schließvorgang rasch und ohne Nachtropfen erfolgt.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, den Schließvorgang in seiner letzten Phase, bevor der Ventilteller schließt, während eines definierten Ansteigens des Wasserstands im Wasservorratsbehälter aufzuhalten und erst bei Erreichen einer zur Erzeugung des notwendigen Dichtungsdrucks erforderlichen Eintauchtiefe des Schwimmers freizugeben, so dass ein schlagartiges Schließen des Ventiltellers erfolgt. Dies ist, wie weiter unten anhand eines Ausführungsbeispiels gezeigt, mit den Merkmalen aus dem kennzeichnenden Teil des Patentanspruchs 1 und in besonders vorteilhafter Weise zusätzlich mit den Merkmalen der Patentansprüche 2 bis 4 erreichbar. Unterstützt werden kann diese Funktionsweise eines schnellen Schließens durch eine besondere Ausgestaltung des Schwimmers, die in den Patentansprüchen 7 bis 9 beschrieben ist.

Die Patentansprüche 10 und 11 beschreiben eine vorteilhafte Ausführungsform des erfindungsgemäßen Ventils, bei der die zur Betätigung des Schwenkarms notwendige Kraft verringert wird.

Es hat sich gezeigt, dass mit dem erfindungsgemäßen schwimmergesteuerten Servoventil ein rasches Schließen ohne Nachlaufen erzielt werden kann.

Im folgenden wird anhand der beigefügten Zeichnungen ein Ausführungsbeispiel für ein schwimmergesteuertes Servoventil nach der Erfindung näher erläutert.

In den Zeichnungen zeigen:
- Fig. 1: ein schwimmergesteuertes Servoventil in Seitenansicht;
- Fig. 2: das Servoventil nach Fig. 1 in einer um 90° verdrehten Seitenansicht;
- Fig. 3: das Steuergestänge des Ventils nach Fig. 1 in vergrößerter, teilweise geschnittener Darstellung;
- Fig. 4: im Schnitt das Ventilgehäuse des Servoventils nach Fig. 1 und 2 bei geschlossenem Ventil;
- Fig. 5: im Schnitt das Ventilgehäuse des Servoventils nach Fig. 1 und 2 bei geöffnetem Ventil;
- Fig. 6: im Schnitt das Ventilgehäuse des Servoventils nach Fig. 1 und 2 bei geschlossenem Ventil mit um 90° gedrehter Schnittebene;
- Fig. 7: das Ventilgehäuse des Servoventils in einer Darstellung analog Fig. 6 bei geöffnetem Ventil mit um 90° gedrehter Schnittebene.

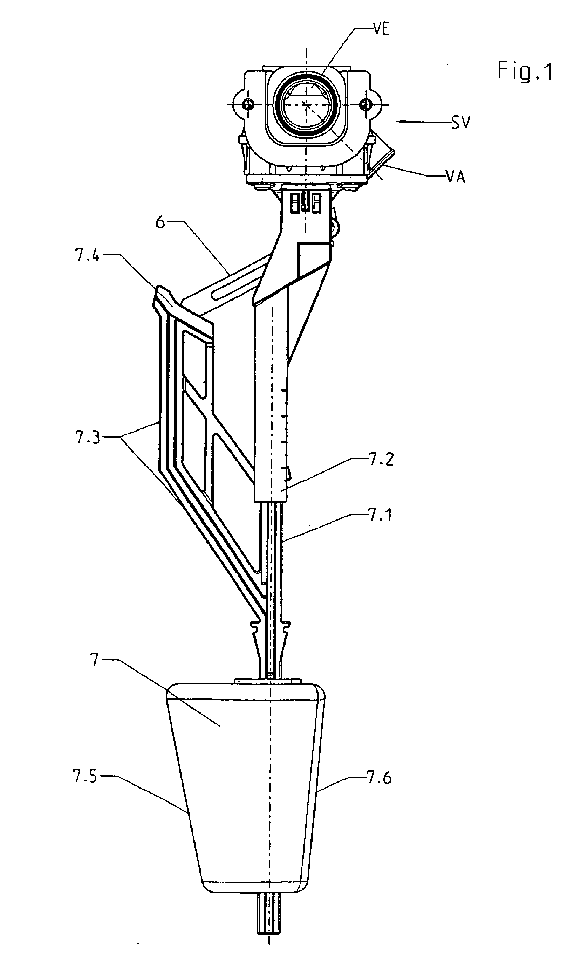

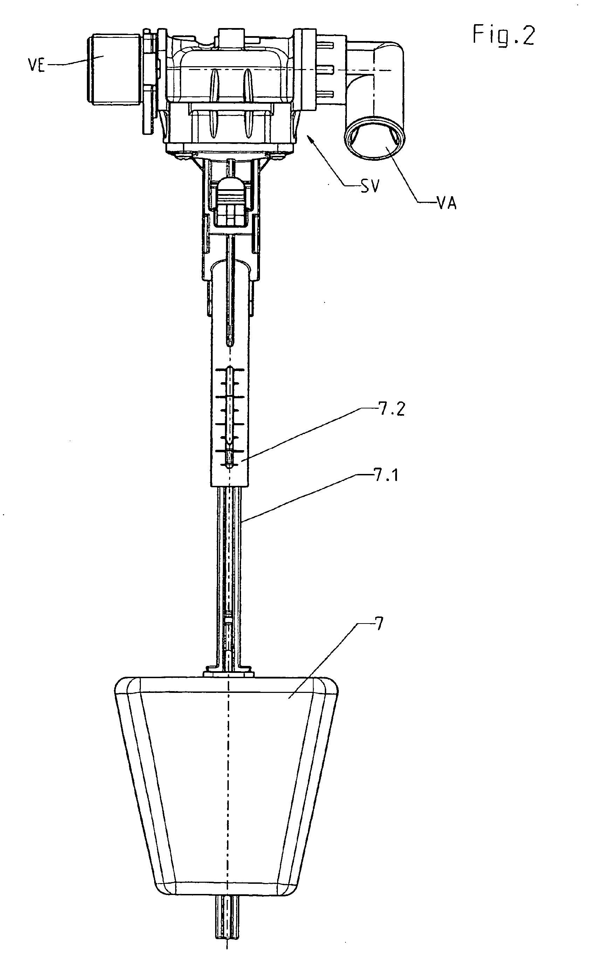

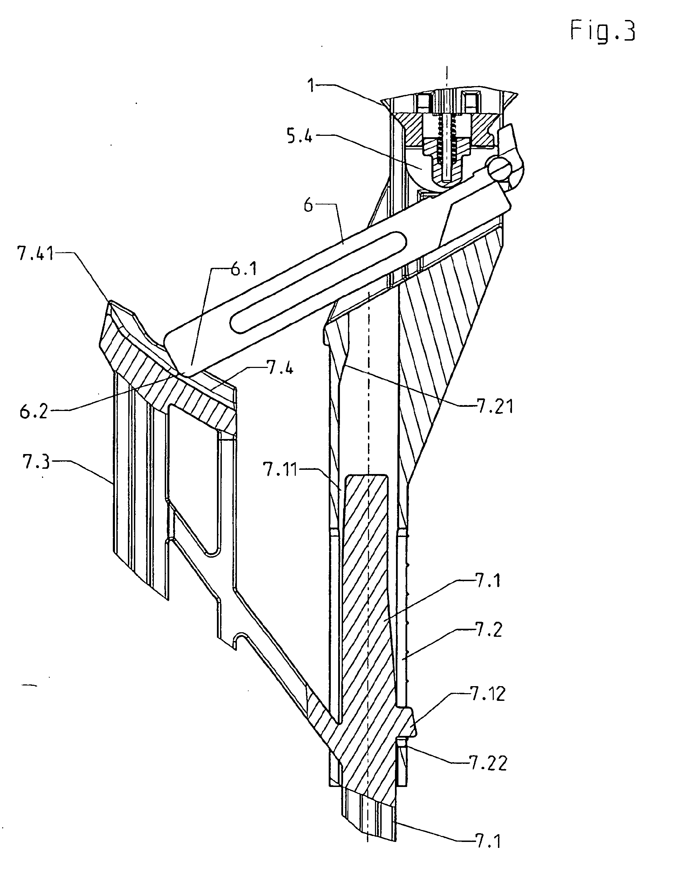

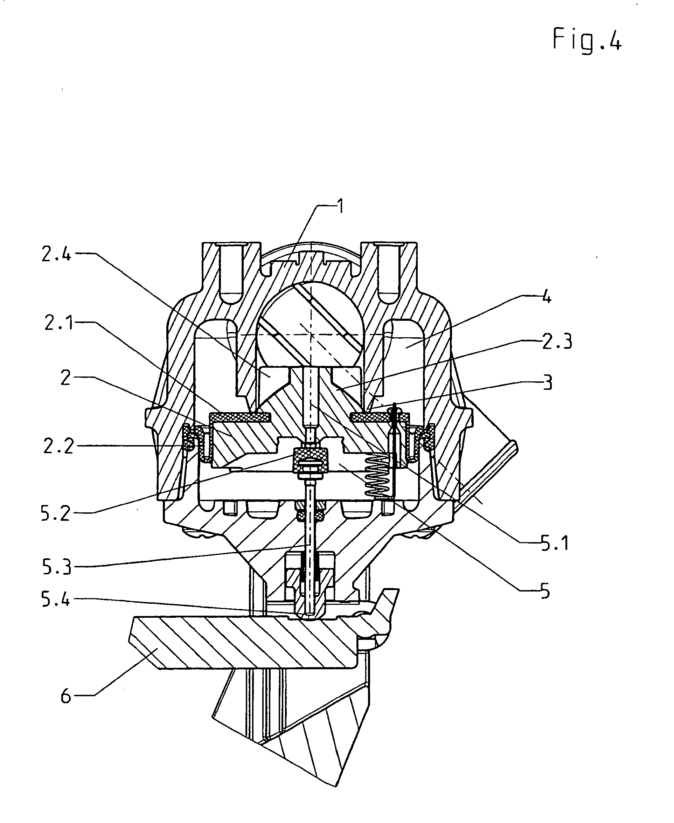

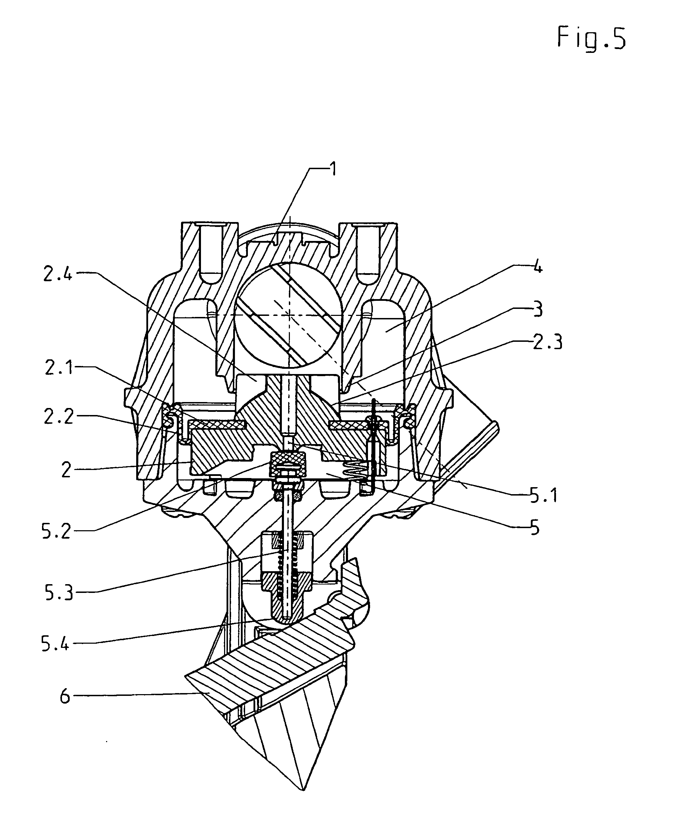

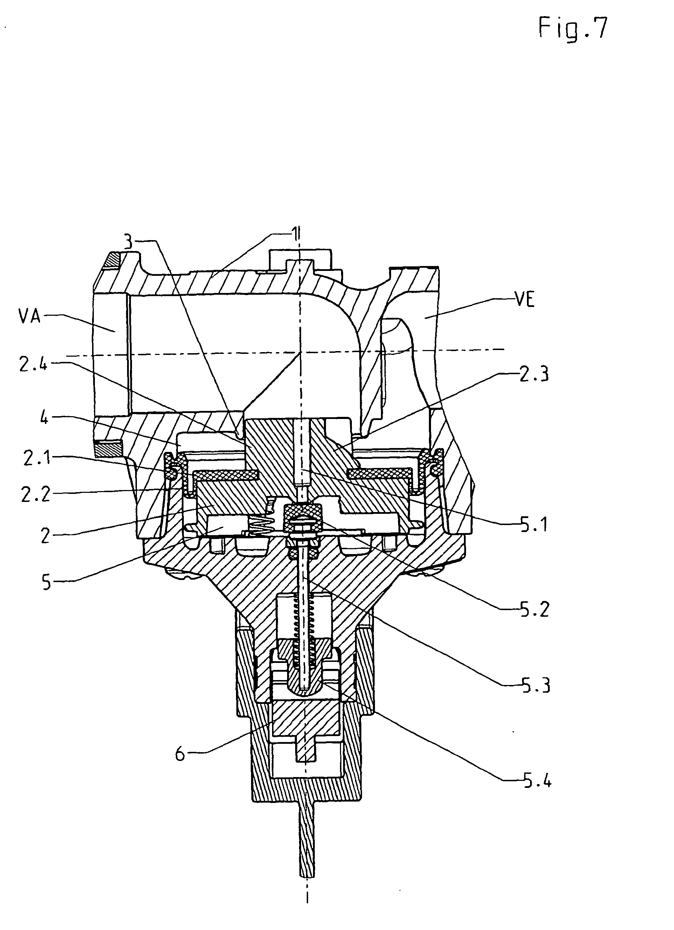

In den Fig. 1 und 2 ist das Servoventil SV, das einen Ventileingang VE und einen Ventilausgang VA besitzt, von außen dargestellt. Seine Funktion wird durch einen Schwimmer 7 gesteuert, der in einem nicht näher dargestellten Wasservorratsbehälter unterhalb des Servoventils SV angeordnet ist. Die genauere Funktion dieser Ansteuerung wird weiter unten beschrieben. Wie aus den Fig. 4 bis 7 zu erkennen, besitzt das Servoventil SV ein in einem Ventilgehäuse 1 bewegbar angeordneten Differentialkolben 2, der an seiner einem Ventilsitz 3 zugewandten Seite den Ventilteller 2.1 trägt, der Teil einer Membran 2.2 ist, deren Außenrand dichtend am Ventilgehäuse 1 befestigt ist. An der dem Ventilsitz 3 zugewandten Seite der Membran 2.2 befindet sich ein mit dem Ventileinlass VE verbundener Druckraum 4, der über den Ventilsitz 3 mit dem Ventilauslass VA verbunden ist. An der vom Ventilsitz 3 abgewandten Seite der Membran 2.2 ist ein Steuerraum 5 angeordnet, der einerseits über eine Entlastungsbohrung 5.1 mit dem Ventilausgang VA und andererseits über einen in den Zeichnungen nicht sichtbaren Steuerkanal mit dem Druckraum 4 verbunden ist. Die Entlastungsbohrung 5.1 ist mittels eines Verschlussorgans 5.2 verschließbar, das über eine Betätigungsstange 5.3 mit einem Betätigungsstößel 5.4 verbunden ist, der an der Oberseite eines Schwenkarms 6 anliegt, der mit seinem einen Ende in der in Fig. 3 dargestellten Weise am Ventilgehäuse 1 angelenkt ist und dessen freies Ende 6.1 über ein Steuergestänge mit dem Schwimmer 7 derart verbunden ist, dass beim Aufsteigen des Schwimmers der Schwenkarm 6 angehoben wird und in einer vorgegebenen Endstellung auf das Verschlussorgan 5.2 eine Kraft ausübt, so dass dieses die Entlastungsbohrung 5.1 verschließt, wodurch im Steuerraum 5 ein den Ventilteller 2.1 auf den Ventilsitz 3 aufsetzender Gegendruck aufgebaut wird.

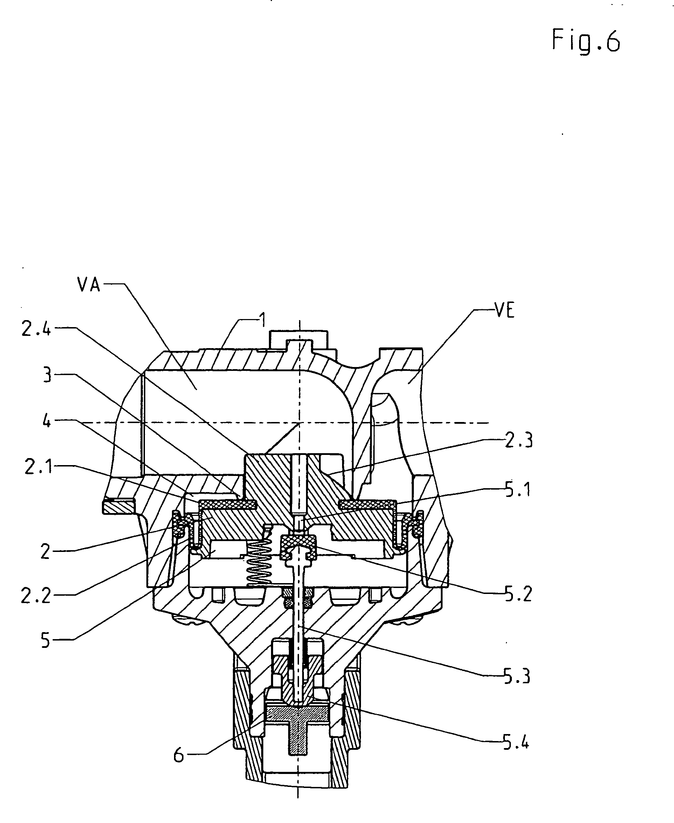

Die Funktionsweise des Ventils entspricht somit der Funktionsweise eines üblichen schwimmergesteuerten Servoventils. Fig. 4 und 6 zeigen das Servoventil in dem Zustand, in welchem der Ventilteller 2.1 auf dem Ventilsitz 3 aufsitzt und das Servoventil somit geschlossen ist. Diese Schließstellung hält an, solange das Verschlussorgan 5.2 die Entlastungsbohrung 5.1 verschließt und somit ein Druckausgleich zwischen dem Steuerraum 5 und dem Druckraum 4 über dem nicht dargestellten Steuerkanal stattfindet. Es ergibt sich aufgrund unterschiedlicher Wirkflächen zu beiden Seiten der Membran 2.2 eine Kraft, die den Ventilteller 2.1 auf dem Ventilsitz 3 festhält. Fällt der Wasserspiegel im Wasservorratsbehälter, so sinkt der Schwimmer 7 ab, und der Schwenkarm 6 schwenkt derart, dass sich das Verschlussorgan 5.2 in eine Stellung bewegt, in der die Entlastungsbohrung 5.1 freigegeben ist. Dies führt zu einem Druckabfall im Steuerraum 5, und der auf die dem Ventilsitz 3 zugekehrte Seite der Membran 2.2 vom Ventileingang VE her wirkende Wasserdruck hebt den Ventilteller 2.2 vom Ventilsitz 3 ab, so dass die Flüssigkeit zum Ventilausgang VA strömt. Der steigende Wasserspiegel im Wasservorratsbehälter bewirkt, dass der Schwimmer 7 sich hebt, bis infolge der Mitbewegung des Schwenkarms 6 das Verschlussorgan 5.2 die Entlastungsbohrung 5.1 wieder verschließt. Nunmehr schließt das Servoventil, und der Wasserfluss wird gestoppt.

Im folgenden wird beschrieben, wie das Steuergestänge und weitere Teile der Gesamtanordnung so ausgebildet werden können, dass dieser Schließvorgang quasi schlagartig erfolgt und kein Nachlaufen des Ventils einsetzt.

Hierzu ist der Schwimmer 7 in einer Linearführung geführt, die ein mit dem Schwimmer 7 fest verbundenes Innenteil 7.1 aufweist, das mit vorgegebenen Spiel in einem mit dem Ventilgehäuse fest verbundenen rohrförmig ausgestalteten Außenteil 7.2 geführt ist. Damit ist die Linearführung so ausgebildet, dass die Bewegung des Schwimmers 7 senkrecht zur nicht dargestellten Wasseroberfläche im Wasservorratsbehälter auf das Innenteil 7.1 übertragen wird. Am Innenteil 7.1 ist ein nach oben ragender Stützarm 7.3 fest angeordnet, der an seinem oberen Ende eine unter einem vorgegebenen Winkel zur Bewegungsrichtung des Schwimmers 7 ansteigende Auflaufschräge 7.4 trägt, auf welcher das freie Schwenkarmende 6.1 aufliegt. Wie Fig. 3 zu entnehmen, wird beim Ansteigen der Auflaufschräge 7.4 aufgrund des Ansteigens des Schwimmers 7 der Schwenkarm 6 nach oben verschwenkt und gleitet dabei mit dem freien Schwenkarmende 6.1 auf der Auflaufschräge 7.4. Wie ebenfalls Fig. 3 zu entnehmen, steigt der Steigungswinkel der Auflaufschräge 7.4 am Ende 7.41 der Bewegungsbahn des Schwenkarmendes 6.1 an. Das Schwenkarmende 6.1 ist mit einer konvex gekrümmten Auflagefläche 6.2 versehen, so dass ein leichtes Gleiten des Schwenkarmendes 6.1 im vorderen, als ebene Bahn ausgestalteten Bereich der Auflaufschräge 7.4 erzielt wird.

Im Außenteil 7.2 der Linearführung ist eine Schrägfläche 7.21 angeordnet, auf welcher nach einer vorgegebenen Bewegungsbahn eine Schrägfläche 7.11 am vorderen Ende des Innenteils 7.1 derart aufläuft, dass das Innenteil 7.1 eine Kippbewegung um eine horizontale Achse ausführt, die auf den Stützarm 7.3 und damit auf die Auflaufschräge 7.4 übertragen wird. Die Anordnung ist so getroffen, dass infolge dieser Kippbewegung das freie Schwenkarmende 6.1 auf den letzten Teil 7.41 der Auflaufschräge mit ansteigendem Steigungswinkel gerät. Dadurch wird der Schwenkarm 6 in seiner Bewegung gehemmt, bis die durch den Schwimmer 7 erzeugte Kraft so groß wird, dass die Hemmung überwunden wird und der Schwenkarm 6 sich sehr rasch weiter nach oben bewegt, wodurch das Verschlussorgan 5.2 sich sehr rasch auf die Entlastungsbohrung 5.1 auflegt und damit das Ventil schlagartig schließt.

Um die Kraftwirkung in der letzten Phase der Schließbewegung noch zu erhöhen, ist der Schwimmer 7 in einer besonderen Weise ausgestaltet, indem er mindestens in einer horizontalen Richtung einen sich von unten nach oben verbreiternden Querschnitt aufweist. Besonders vorteilhaft ist hier eine kegelstumpfförmige Ausbildung des Schwimmers 7, wie sie in den Fig. 1 und 2 dargestellt ist. Durch diese Ausbildung des Schwimmers erhöht sich die Auftriebskraft mit steigendem Wasserstand überproportional. Der Schwimmer 7 besitzt an seiner einer nicht dargestellten benachbarten Behälterwand zugewandten Seite eine im wesentlichen parallel zu dieser Behälterwand verlaufende Außenfläche 7.6, ist also an dieser Stelle quasi abgeschnitten, wodurch der vorhandene Raum besser ausgenutzt werden kann.

Um bei absinkendem Schwimmer ein Herausfallen des Innenteils 7.1 aus dem Außenteil 7.2 der Linearführung zu verhindern, ist das Innenteil mit einem Anschlagnocken 7.12 versehen, der bei der Abwärtsbewegung hinter eine Schulter 7.22 des Außenteils 7.2 greift.

Weiterhin ist die Funktionsweise des Ventils noch dadurch verbessert, dass an der dem Ventilsitz 3 zugekehrten Seite des Differentialkolbens 2 ein beim Schließen in den Ventilsitz eintauchender Regelkörper 2.3 mit einer vorgegebenen konvex ausgebildeten Außenkontur angeordnet ist. Der Regelkörper 2.3 besitzt an seiner Außenkontur eine vorgegebene Anzahl radial und axial verlaufender, am Ventilsitz 3 geführter Führungsstege 2.4 mit vorgegebener Breite. Durch diese Ausbildung des Regelkörpers wird erreicht, dass die zum Schließen des Ventils notwendige Kraft verringert und das Regelverhalten verbessert wird.

## Patentansprüche

1. Schwimmergesteuertes Servoventil (SV) mit einem in einem Ventilgehäuse (1) bewegbar angeordneten, den Ventilteller (2.1) tragenden Differentialkolben (2), an dessen einer Seite ein mit dem Ventileinlass (VE) verbundener Druckraum (4) angeordnet ist, der über einen dem Ventilteller (2.1) gegenüberliegenden Ventilsitz (3) mit dem Ventilauslass (VA) verbunden ist, und an dessen anderer Seite ein Steuerraum (5) angeordnet ist, der über eine mittels eines Verschlussorgans (5.2) verschließbare Entlastungsbohrung (5.1) mit dem Ventilauslass (VA) oder dem Außenraum und über einen Steuerkanal mit dem Druckraum (4) verbunden ist, wobei das Verschlussorgan (5.2 mit einem durch den in einem Wasservorratsbehälter unterhalb des Servoventils (SV) angeordneten Schwimmer (7) anhebbaren Schwenkarm (6) derart verbunden ist, dass beim Anheben des Schwenkarms (6) in eine vorgegebene Endstellung das Verschlussorgan (5.2) die Entlastungsbohrung (5.1) verschließt, wodurch im Steuerraum (5) ein den Ventilteller (2.1) auf den Ventilsitz (3) aufsetzender Gegendruck aufgebaut wird, wobei an dem in einer Linearführung (7.1-7.2) in Richtung senkrecht zur Wasseroberfläche im Wasservorratsbehälter geführten Schwimmer (7) ein nach oben ragender Stützarm (7.3) angeordnet ist, der an seinem oberen Ende eine Auflauffläche (7.4) trägt, auf welcher das freie Schwenkarmende (6.1) aufliegt **dadurch gekennzeichnet, dass** die Auflauffläche (7.4) zur Bewegungsrichtung des Schwimmers ansteigt und dass die Linearführung ein Innenteil (7.1) aufweist, welches mit vorgegebenem Spiel in einem Außenteil (7.2) geführt ist, wobei das Innenteil mit dem Schwimmer (7) und dem Stützarm (7.3) oder dem Ventilgehäuse und das Außenteil mit dem Ventilgehäuse (1) oder dem Schwimmer und dem Stützarm fest verbunden ist und im mit dem Ventilgehäuse verbundenen Teil (7.2) eine Schrägfläche (7.21) angeordnet ist, auf welche nach einer vorgegebenen Bewegungsstrecke eine Fläche oder Kante (7.11) des mit dem Schwimmer und dem Stützarm verbundenen Teils (7.1) derart aufläuft, dass der Stützarm (7.3) eine Kippbewegung um seine horizontale Achse ausführt, wobei die Anordnung so ist, dass infolge der Kippbewegung das freie Schwenkarmende (6.1) sich um eine vorgegebene Strecke auf der Auflauffläche (7.4) weiterbewegt.

2. Servoventil nach Anspruch 1, **dadurch gekennzeichnet, dass** die Auflauffläche (7.4) als unter einem vorgegebenen Winkel zur Bewegungsrichtung des Schwimmers (7) ansteigende, ebene Auflaufschräge ausgebildet ist, wobei der Steigungswinkel der Auflaufschräge am Ende (7.41) der Bewegungsbahn des Schwenkarmendes (6.1) ansteigt.

3. Servoventil nach Anspruch 1, **dadurch gekennzeichnet, dass** die Auflauffläche als konkav gekrümmte Fläche mit am Ende der Bewegungsbahn des Schwenkarmendes ansteigender Krümmung ausgebildet ist.

4. Servoventil nach Anspruch 2 oder 3, **dadurch gekennzeichnet, dass** die Anordnung der Auflauffläche (7.4) und des Schwenkarms (6) so ist, dass infolge der Kippbewegung des Stützarms (7.3) das freie Schwenkarmende (6.1) auf den Teil der Auflauffläche (7.4) mit ansteigendem Steigungswinkel bzw. ansteigender Krümmung gerät.

5. Servoventil nach einem der Ansprüche 1 bis 4, **dadurch gekennzeichnet, dass** das freie Schwenkarmende (6.1) mit einer konvex gekrümmten Auflauffläche (6.2) versehen ist.

6. Servoventil nach einem der Ansprüche 1 bis 5, **dadurch gekennzeichnet, dass** das Innenteil (7.1) der Linearführung einen das Herausfallen des Innenteils aus dem Außenteil (7.2) verhindernden Anschlagnocken (7.12) aufweist.

7. Servoventil nach einem der Ansprüche 1 bis 6, **dadurch gekennzeichnet, dass** der Schwimmer (7) mindestens in einer horizontalen Richtung einen sich von unten nach oben verbreiternden Querschnitt aufweist.

8. Servoventil nach Anspruch 7, **dadurch gekennzeichnet, dass** der Schwimmer (7) als sich von unten nach oben verbreiternder Kegelstumpf ausgebildet ist.

9. Servoventil nach Anspruch 7 oder 8, **dadurch gekennzeichnet, dass** der Schwimmer an seiner einer benachbarten Behälterwand zugewandten Seite in einer Richtung parallel zur Behälterwand abgeschnitten ist.

10. Servoventil nach einem der Ansprüche 1 bis 9, **dadurch gekennzeichnet, dass** an der dem Ventilsitz (3) zugekehrten Seite des Differentialkolbens (2) ein beim Schließen in den Ventilsitz (3) eintauchender Regelkörper (2.3) mit einer vorgegebenen konvex gekrümmt ausgebildeten Außenkontur angeordnet ist.

11. Servoventil nach Anspruch 10, **dadurch gekennzeichnet, dass** der Regelkörper (2.3) an seiner Außenseite eine vorgegebene Anzahl radial und axial verlaufender, am Ventilsitz (3) geführter Führungsstege (2.4) vorgegebener Breite aufweist.

## Claims

1. Float-controlled servo valve (SV) having a differential piston (2) which is disposed movably in a valve housing (1) and carries the valve disc (2.1) and on one side of which there is disposed a pressure space (4) which is connected to the valve inlet (VE) and, via a valve seat (3) lying opposite said valve disc (2.1), to the valve outlet (VA) and on the other side of which there is disposed a control space (5) which is connected, via a relief bore (5.1) which can be sealed by means of a sealing component (5.2), to said valve outlet (VA) or the external space and, via a control conduit, to the pressure space (4); wherein said sealing component (5.2) is connected in such a way to a swivel arm (6), which can be lifted by the float (7) disposed in a water storage container underneath the servo valve (SV), that the sealing component (5.2) seals the relief bore (5.1) when the swivel arm (6) is lifted into a predetermined end position, as a result of which a counter-pressure which lowers the valve disc (2.1) onto the valve seat (3) is built up in the control space (5); and wherein there is disposed, on the float (7) which is guided in a linear guide (7.1-7.2) in a direction perpendicular to the surface of the water in the water storage container, an upwardly projecting supporting arm (7.3) which carries, at its upper end, a run-up face (7.4) on which the free end (6.1) of the swivel arm rests; **characterised in that** said run-up face (7.4) rises in the direction of movement of the float and that the linear guide has an inner part (7.1) which is guided, with predetermined clearance, in an outer part (7.2), said inner part being fixedly connected to the float (7) and to the supporting arm (7.3) or the valve housing, and said outer part being fixedly connected to the valve housing (1) or to the float and the supporting arm, and there being disposed in the part (7.2) connected to the valve housing a sloping face (7.21) onto which, after a predetermined distance of movement, a face or edge (7.11) on the part (7.1) connected to the float and the supporting arm runs up in such a way that said supporting arm (7.3) executes a tilting movement about its horizontal axis, the disposition being such that, as a result of the tilting movement, the free end (6.1) of the swivel arm moves onwards, by a predetermined distance, on the run-up face (7.4).

2. Servo valve according to claim 1, **characterised in that** the run-up face (7.4) is constructed as a flat run-up slope which rises at a predetermined angle in the direction of movement of the float (7), the angle of inclination of said run-up slope increasing at the end (7.41) of the path of movement of the end (6.1) of the swivel arm.

3. Servo valve according to claim 1, **characterised in that** the run-up face is constructed as a concavely curved face with a curvature which increases at the end of the path of movement of the end of the swivel arm.

4. Servo valve according to claim 2 or 3, **characterised in that** the disposition of the run-up face (7.4) and of the swivel arm (6) is such that, as a result of the tilting movement of the supporting arm (7.3), the free end (6.1) of the swivel arm gets onto the part of the run-up face (7.4) which has an increasing angle of inclination or an increasing curvature.

5. Servo valve according to one of claims 1 to 4, **characterised in that** the free end (6.1) of the swivel arm is provided with a convexly curved run-up face (6.2).

6. Servo valve according to one of claims 1 to 5, **characterised in that** the inner part (7.1) of the linear guide has a stop cam (7.12) which prevents said inner part from falling out of the outer part (7.2).

7. Servo valve according to one of claims 1 to 6, **characterised in that** the float (7) has, at least in a horizontal direction, a cross-section which broadens from bottom to top.

8. Servo valve according to claim 7, **characterised in that** the float (7) is constructed as a truncated cone which broadens from bottom to top.

9. Servo valve according to claim 7 or 8, **characterised in that** the float is cut off, on its side that faces towards an adjacent container wall, in a direction parallel to the container wall.

10. Servo valve according to one of claims 1 to 9, **characterised in that** there is disposed, on that side of the differential piston (2) which faces towards the valve seat (3), a regulating body (2.3) which plunges into the valve seat (3) when closure occurs, and has a predetermined outer contour of convexly curved construction.

11. Servo valve according to claim 10, **characterised in that** the regulating body (2.3) has, on its outer side, a predetermined number of guide webs (2.4) of predetermined width which extend radially and axially and are guided on the valve seat (3).

## Revendications

1. Servovanne (SV) commandée par flotteur, comportant un piston différentiel (2), qui est agencé mobile dans un boîtier de vanne (1) et porte une tête de vanne (2.1) et dont un côté est adjacent à une chambre sous pression (4), reliée à l'entrée de vanne (VE) et reliée à la sortie de vanne (VA) par l'intermédiaire d'un siège de vanne (3) situé en face de la tête de vanne (2.1), et dont l'autre côté est adjacent à une chambre de commande (5), reliée à la sortie de vanne (VA) ou à l'extérieur par l'intermédiaire d'une forure de détente (5.1), apte à être obturée par un organe de fermeture (5.2), et reliée à la chambre sous pression (4) par l'intermédiaire d'un conduit de commande, l'organe de fermeture (5.2) étant relié à un bras pivotant (6) pouvant être relevé par le flotteur (7) agencé dans un réservoir d'eau en dessous de la servovanne (SV), de telle sorte que lors du relevage du bras pivotant (6) dans une position finale prédéfinie, l'organe de fermeture (5.2) obture la forure de détente (5.1), moyennant quoi il se développe dans la chambre de commande (5) une contre-pression par laquelle la tête de vanne (2.1) est en appui sur le siège de vanne (3), étant entendu que, contre le flotteur (7) guidé dans une glissière linéaire (7.1-7.2) dans une direction perpendiculaire à la surface de l'eau dans le réservoir d'eau, est agencé un bras d'appui (7.3) en saillie vers le haut, dont l'extrémité supérieure porte une surface de contact (7.4), sur laquelle prend appui l'extrémité libre (6.1) du bras pivotant, **caractérisée en ce que** la surface de contact (7.4) est en pente ascendante par rapport au sens de déplacement du flotteur, et **en ce que** la glissière linéaire comporte une partie intérieure (7.1), qui est guidée avec un jeu prédéfini dans une partie extérieure (7.2), la partie intérieure étant assemblée de manière fixe au flotteur (7) et au bras d'appui (7.3) ou au boîtier de vanne et la partie extérieure étant assemblée de manière fixe au boîtier de vanne (1) ou au flotteur et au bras d'appui, et une surface inclinée (7.21) étant réalisée dans la partie (7.2) assemblée au boîtier de vanne, sur laquelle surface, après une distance de déplacement prédéfinie, monte une surface ou un bord (7.11) de la partie (7.1), reliée au flotteur et au bras d'appui, de telle sorte que le bras d'appui (7.3) effectue un mouvement de basculement autour de son axe horizontal, l'agencement étant prévu de telle sorte que, à la suite du mouvement de basculement, l'extrémité libre (6.1) du bras pivotant continue à se déplacer sur une distance prédéfinie sur la surface de contact (7.4).

2. Servovanne selon la revendication 1, **caractérisée en ce que** la surface de contact (7.4) est réalisée sous la forme d'une rampe plane en pente ascendante selon un angle prédéfini par rapport au sens de déplacement du flotteur (7), l'angle d'inclinaison de la surface de contact augmentant à la fin (7.41) de la voie de déplacement de l'extrémité (6.1) du bras pivotant.

3. Servovanne selon la revendication 1, **caractérisée en ce que** la surface de contact est réalisée sous la forme d'une surface courbe avec une courbure croissante à la fin de la voie de déplacement de l'extrémité du bras pivotant.

4. Servovanne selon la revendication 2 ou 3, **caractérisée en ce que** l'agencement de la surface de contact (7.4) et du bras pivotant (6) est prévu de telle sorte que, par suite du mouvement de basculement du bras d'appui (7.3), l'extrémité libre (6.1) du bras pivotant parvient sur la partie de la surface de contact (7.4) avec l'angle d'inclinaison croissant ou la courbure croissante.

5. Servovanne selon l'une quelconque des revendications 1 à 4, **caractérisée en ce que** l'extrémité libre (6.1) du bras pivotant est munie d'une surface de contact (6.2) avec une courbure convexe.

6. Servovanne selon l'une quelconque des revendications 1 à 5, **caractérisée en ce que** la partie intérieure (7.1) de la glissière linéaire comporte un ergot de butée (7.12) empêchant que la partie intérieure puisse tomber hors de la partie extérieure (7.2).

7. Servovanne selon l'une quelconque des revendications 1 à 6, **caractérisée en ce que** le flotteur (7), au moins dans une direction horizontale, a une section s'élargissant du bas vers le haut.

8. Servovanne selon la revendication 7, **caractérisée en ce que** le flotteur (7) est réalisé en forme de cône tronqué s'élargissant du bas vers le haut.

9. Servovanne selon la revendication 7 ou 8, **caractérisée en ce que** le flotteur, sur son côté orienté vers une paroi adjacente du réservoir, est coupé dans une direction parallèle à la paroi du réservoir.

10. Servovanne selon l'une quelconque des revendications 1 à 9, **caractérisée en ce que** sur le côté du piston différentiel (2), orienté vers le siège de vanne (3), est agencé un corps de réglage (2.3) qui s'engage dans le siège de vanne (3) et possède un contour extérieur avec une courbure convexe prédéfinie.

11. Servovanne selon la revendication 10, **caractérisée en ce que** le corps de réglage (2.3), sur sa face extérieure, est muni d'un nombre prédéfini de nervures de guidage (2.4) de largeur prédéfinie, lesquelles sont logées sur le siège de vanne (3) en étant orientées dans le sens radial et axial.
